(19) **Europäisches Patentamt / European Patent Office / Office européen des brevets**

(11) **EP 4 631 989 A1**

(12) **EUROPEAN PATENT APPLICATION**
published in accordance with Art. 153(4) EPC

(43) Date of publication:
15.10.2025 Bulletin 2025/42

(51) International Patent Classification (IPC):
*C08G 63/20* (2006.01)     *C08G 63/85* (2006.01)
*D01F 6/84* (2006.01)      *D01F 8/02* (2006.01)

(21) Application number: 23899845.4

(22) Date of filing: 29.11.2023

(52) Cooperative Patent Classification (CPC):
C08G 63/20; C08G 63/85; C08G 63/90;
C08G 63/91; D01F 6/84; D01F 8/02; D01F 8/14;
D01F 8/18

(86) International application number:
PCT/CN2023/134897

(87) International publication number:
WO 2024/120266 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.12.2022  CN 202211573439

(71) Applicants:
• KINGFA SCI. & TECH. CO., LTD.
  Guangzhou, Guangdong 510663 (CN)
• Zhuhai Kingfa Biomaterial Co., Ltd.
  Zhuhai, Guangdong 519050 (CN)

(72) Inventors:
• LU, Changli
  Guangzhou, Guangdong 510663 (CN)
• CHEN, Pingxu
  Guangzhou, Guangdong 510663 (CN)

• YE, Nanbiao
  Guangzhou, Guangdong 510663 (CN)
• ZENG, Xiangbin
  Guangzhou, Guangdong 510663 (CN)
• JIAO, Jian
  Guangzhou, Guangdong 510663 (CN)
• WANG, Chaojun
  Guangzhou, Guangdong 510663 (CN)
• OUYANG, Chunping
  Guangzhou, Guangdong 510663 (CN)
• ZHANG, Erjie
  Guangzhou, Guangdong 510663 (CN)
• GUO, Zhilong
  Guangzhou, Guangdong 510663 (CN)
• YAO, Yi
  Guangzhou, Guangdong 510663 (CN)
• ZHANG, Chuanhui
  Guangzhou, Guangdong 510663 (CN)

(74) Representative: Petraz, Gilberto Luigi et al
GLP S.r.l.
Viale Europa Unita, 171
33100 Udine (IT)

(54) **ALIPHATIC-AROMATIC POLYESTER COMPOSITION AND PREPARATION METHOD THEREFOR AND USE THEREOF, AND POLYESTER FIBER AND PREPARATION METHOD THEREFOR AND USE THEREOF**

(57) Disclosed in the present invention are an aliphatic-aromatic polyester composition, a polyester fiber, a preparation method therefor and use thereof. The aliphatic-aromatic polyester composition of the present invention includes the following components: i) an aliphatic-aromatic polyester based on aliphatic and aromatic dicarboxylic acids and an aliphatic dihydroxy compound; and ii) a titanium element, wherein calculated based on a weight of the aliphatic-aromatic polyester composition, a content of the titanium element is 55-88 ppm, and an acid number of the aliphatic-aromatic polyester composition is ≤0.84 mg KOH/g according to the standard DIN EN 12634-1998. The aliphatic-aromatic polyester composition of the present invention not only has a low yellowness index and good coloring performance, but also effectively improves hydrolysis resistance, and can be widely used in the field of polyester fibers.

EP 4 631 989 A1

**Description**

## TECHNICAL FIELD

The present invention relates to the technical field of polyester compositions, and more specifically relates to an aliphatic-aromatic polyester composition, a polyester fiber, a preparation method therefor and use thereof.

## BACKGROUND

With rapid development of high polymer materials, shortcomings of the high polymer materials are also found while their importance is increasingly prominent, that is, most of the synthetic high polymer materials are difficult to be degraded in nature and result in "white pollution". As indispensable fiber materials for the production and life of humans, wastes of the materials have also been greatly concerned. Especially, artificially synthetic traditional chemical fibers, such as PET fibers and PBT fibers, are difficult to be degraded and have become new sources of pollution. Fiber products prepared from biodegradable materials can be decomposed into carbon dioxide and water under the action of microorganisms, which are harmless to the environment and have become the best choice to replace the traditional chemical fiber materials.

During processing of polyester materials into fibers, the materials are usually required to be colored. To facilitate coloring, the polyester materials are usually required to have a low yellowness index. Aliphatic-aromatic polyesters obtained from aliphatic dicarboxylic acids such as adipic acid, aromatic dicarboxylic acids such as terephthalic acid, and aliphatic dihydroxy compounds such as 1,4-butanediol are known in the prior art. When the aliphatic-aromatic polyesters are synthesized, a commonly used catalyst includes a tin compound, an antimony compound, a cobalt compound, a lead compound, a zinc compound, an aluminum compound, or a titanium compound, most preferably the titanium compound. The titanium compound, such as tetrabutyl titanate or tetraisopropyl titanate, has the advantage of a less toxic residue amount remaining in a product or a downstream product compared with other compounds. Such property is particularly important in biodegradable polyesters, because products containing the same are introduced directly into the environment after being discarded. However, it has been found that when adipic acid is used and the titanium compound is used as the catalyst simultaneously, the aliphatic-aromatic polyesters obtained usually show a color ranging from yellow to red, which are difficult to meet requirements of the fiber products for color.

To improve the color of the aliphatic-aromatic polyesters, a method for preparing an aliphatic-aromatic polyester is disclosed in the prior art. By adding 0.03-0.04 wt% of a phosphorus compound during a polymerization process (between a step ii and a step iii), the aliphatic-aromatic polyester with a whiteness index of at least 25 is obtained. The phosphorus compound, as a passivator of the titanium catalyst, weakens the activity of the titanium catalyst to a certain extent, leading to a higher acid number (1.1 to 1.4 mg KOH/g) of the obtained aliphatic-aromatic polyester, thus decreasing hydrolysis resistance of the aliphatic-aromatic polyester. Therefore, it is necessary to develop a biodegradable polyester that simultaneously has a low yellowness index and better hydrolysis resistance.

## SUMMARY

The objectives of the present invention are to overcome the defects and shortcomings that existing biodegradable polyesters cannot simultaneously have a low yellowness index and better hydrolysis resistance, and to provide an aliphatic-aromatic polyester composition. The aliphatic-aromatic polyester composition not only has a low yellowness index (YI) value, but also has better hydrolysis resistance.

Another objective of the present invention is to provide a method for preparing the aliphatic-aromatic polyester composition.

Another objective of the present invention is to provide a polyester fiber, wherein the polyester fiber adopts the aliphatic-aromatic polyester composition of the present invention as a base resin.

Another objective of the present invention is to provide a method for preparing the polyester fiber.

Another objective of the present invention is to provide use of the polyester fiber in masks and clothing.

The above objectives of the present invention are achieved through the following technical solutions.

An aliphatic-aromatic polyester composition is characterized in that the composition includes the following components:

i) an aliphatic-aromatic polyester based on aliphatic and aromatic dicarboxylic acids and an aliphatic dihydroxy compound, wherein the aliphatic-aromatic polyester at least includes the following components:

A) a dicarboxylic acid component:

a1) calculated based on a total molar amount of a1) and a2), 46.2-49.5 mol% of an aromatic dicarboxylic acid or a derivative of an ester thereof, or a mixture thereof;

a2) calculated based on the total molar amount of the a1) and the a2), 50.5-53.8 mol% of an aliphatic dicarboxylic acid or a derivative of an ester thereof, or a mixture thereof;

wherein a total molar percentage of the components a1) and a2) is 100%;

and B) a dihydroxy compound component:

b1) a $C_2$-$C_6$ aliphatic alkanediol with at least the same molar amount as the component A, or a mixture thereof;

b2) calculated based on a total weight of the components A and b1, 0-3 wt% of a compound containing at least three functional groups; and

ii) a titanium element, wherein calculated based on a weight of the aliphatic-aromatic polyester composition, a content of the titanium element is 55-88 ppm;

wherein an acid number of the aliphatic-aromatic polyester composition is ≤0.84 mg KOH/g according to the standard DIN EN 12634-1998.

According to the standard ASTM E313-73, a yellowness index (YI) value of the aliphatic-aromatic polyester composition is ≤23.

When the aliphatic-aromatic polyester composition is boiled in water at 60°C for 48 h, a viscosity number retention rate η of the aliphatic-aromatic polyester composition is ≥65% after boiling in water, indicating that the composition has good hydrolysis resistance,

$$\eta = \eta_1 / \eta_0$$

wherein

$\eta_1$ represents a viscosity number of the aliphatic-aromatic polyester composition after boiling in water at 60°C for 48 h, and

$\eta_0$ represents a viscosity number of the aliphatic-aromatic polyester composition before boiling in water.

Specifically, the hydrolysis resistance of the aliphatic-aromatic polyester composition is evaluated according to the following method:

1) dehumidifying and drying an aliphatic-aromatic polyester composition sample at 80°C for 4 h, and testing the initial viscosity number $\eta_0$ before boiling in water according to the standard GB/T 17931-1999;

2) placing the aliphatic-aromatic polyester composition sample in a water bath for boiling in water at 60°C for 48 h;

3) after 48 h, taking out the aliphatic-aromatic polyester composition sample, and transferring the sample into a dryer for storage at an ambient temperature for 24 h to achieve internal equilibrium conditions of the sample; and

4) after reaching equilibrium, dehumidifying and drying the sample at 80°C for 4 h, and testing the viscosity number $\eta_1$ after boiling in water for 48 h according to the standard GB/T 17931-1999.

When adipic acid is used as a raw material and a titanium compound is used as a catalyst simultaneously, the aliphatic-aromatic polyester obtained usually shows a color ranging from yellow to red. When the content of the titanium element in the aliphatic-aromatic polyester composition is too high, the color of the aliphatic-aromatic polyester composition is affected, the yellowness index (YI) value is too high, and the too high content of the titanium element also weakens the hydrolysis resistance of the aliphatic-aromatic polyester composition. In addition, during synthesis of the aliphatic-aromatic polyester, when an addition amount of the titanium element exceeds a certain range, a thermal decomposition reaction (reverse reaction) of the aliphatic-aromatic polyester is also intensified due to increase of the addition amount of the titanium element, resulting in a yellow color of a product. When the content of the titanium element is too low, a residence time of a polymerization reaction is too long, which is not conducive to decreasing the acid number of the aliphatic-aromatic polyester and is unable to obtain the aliphatic-aromatic polyester composition with the low acid number. The high acid number also further weakens the hydrolysis resistance of the aliphatic-aromatic polyester composition. Meanwhile, the high acid number also further intensifies the thermal decomposition reaction during a polymerization process of the aliphatic-aromatic polyester, resulting in a yellow color of a product.

It should be noted that the titanium element of the present invention may be derived from a titanium compound, for example, may be tetrabutyl titanate or tetraisopropyl titanate, and may also be derived from other titanium-containing compounds added additionally during the polymerization process.

In specific embodiments, preferably, the dicarboxylic acid component A) includes the following components:

a1) calculated based on the total molar amount of the a1) and the a2), 47.3-48.8 mol% of the aromatic dicarboxylic acid or a derivative of an ester thereof, or a mixture thereof; and

a2) calculated based on the total molar amount of the a1) and the a2), 51.2-52.7 mol% of adipic acid or a derivative of an ester thereof, or a mixture thereof;

wherein the total molar percentage of the components a1) and a2) is 100%.

In specific embodiments, the aromatic dicarboxylic acid in the above a1) may be an aromatic dicarboxylic acid having 8-20 carbon atoms, preferably 8-12 carbon atoms, for example, may be: for example, mentionable compounds, such as terephthalic acid, isophthalic acid, 2,6-naphthoic acid and 1,5-naphthoic acid, and derivatives of an ester thereof, and a di-$C_1$-$C_6$ alkyl ester particularly mentioned herein, such as dimethyl ester, diethyl ester, di-n-propyl ester, diisopropyl ester, di-n-butyl ester, diisobutyl ester, di-tert-butyl ester, di-n-pentyl ester, diisopentyl ester, or di-n-hexyl ester. Acid anhydrides of these dicarboxylic acids a1 are also suitable derivatives that form esters.

The aromatic dicarboxylic acid or a derivative of an ester thereof, a1, may be used separately or used in a mixture of two or more. Particularly preferably, the terephthalic acid or a derivative of an ester thereof is used, for example, dimethyl terephthalate.

In specific embodiments, the above a2) is adipic acid or a derivative of an ester thereof, or a mixture thereof.

The derivative of the ester that can be mentioned includes, particularly, a di-$C_1$-$C_6$-alkyl ester, such as dimethyl ester, diethyl ester, di-n-propyl ester, diisopropyl ester, di-n-butyl ester, diisobutyl ester, di-tert-butyl ester, di-n-pentyl ester, diisopentyl ester, or di-n-hexyl ester. An acid anhydride of the dicarboxylic acid may also be used.

In the present invention, the dicarboxylic acid or a derivative of an ester thereof may be used separately or used in the form of a mixture of two or more.

The dihydroxy compound component b1 is usually selected from a branched or linear aliphatic alkanediol having 2-6 carbon atoms. Suitable examples of the aliphatic alkanediol include: ethylene glycol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol, and 2-ethyl-2-butyl-1,3-propanediol, particularly ethylene glycol, 1,3-propanediol, and 1,4-butanediol. 1,4-butanediol is particularly preferred, especially in combination with adipic acid as the component a2). A mixture of different aliphatic alkanediols may also be used.

The component b2) preferably includes a compound having at least three functional groups. Particularly preferably, the compound has 3-6 hydroxy groups. Mentionable examples include: tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride. Polyols, such as trihydroxymethylpropane, pentaerythritol and glycerol, are preferred, and glycerol is particularly preferred.

A use amount of the component b2), calculated based on the total weight of the components A) and b1), is more preferably 0.02-1 wt%, particularly preferably 0.08-0.60 wt%.

The aliphatic-aromatic polyester composition of the present invention may also include component C) used as a chain extender, and the component C) is selected from

c1) an isocyanate, c2) a peroxide, c3) an epoxide, and c4) oxazoline, oxazine, caprolactam, and/or carbodiimide.

An aromatic diisocyanate or an aliphatic diisocyanate may be used as the isocyanate in the component c1) of the present invention. For example, the aromatic diisocyanate may be toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate.

Particularly preferably, diphenylmethane-2,2'-diisocyanate, diphenylmethane-2,4'-diisocyanate or diphenylmethane-4,4'-diisocyanate is used as the component c1).

The isocyanate that can also be used includes tri(4-isocyanatophenyl)methane with three rings. The polynuclear aromatic diisocyanate can, for example, be formed during production of a diisocyanate with one or two rings.

For the present invention, the aliphatic diisocyanate may be any linear or branched alkylene diisocyanate or cycloalkylene diisocyanate containing 2-20 carbon atoms, preferably 3-12 carbon atoms, for example, may be: hexamethylene-1,6-diisocyanate, isophorone diisocyanate, or methylene bis(4-isocyanatocyclohexane).

Particularly preferably, the aliphatic diisocyanate is the hexamethylene-1,6-diisocyanate.

A use amount of the component c1), calculated based on the total weight of the aliphatic-aromatic polyester composition, may be 0.05-2 wt%, particularly preferably 0.1-1.5 wt%.

The peroxide (component c2) of the present invention may be a mixture of one or more of the following compounds:

benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, $\alpha,\alpha$-di(tert-butylperoxy) diisopropylbenzene, 2,5-dimethyl-2,5-di(tert-butylperoxy)hexane, 2,5-dimethyl-2,5-di(tert-butylperoxy)hexan-3-acetylene, and tert-butylperoxy cumene.

A use amount of the component c2), calculated based on the total weight of the aliphatic-aromatic polyester composition, may be 0.1-2 wt%, particularly preferably 0.2-1 wt%.

The epoxide (component c3) of the present invention may be: one or more of diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, polybutylene glycol diglycidyl ether, and a copolymer containing an epoxy group based on styrene, acrylate and/or methacrylate.

A use amount of the component c3), calculated based on the total weight of the aliphatic-aromatic polyester composition, may be 0.1-2 wt%, preferably 0.2-1 wt%.

The component c4) of the present invention may be dioxazoline and dioxazine with a bridging portion of a single bond, $(CH_2)_z$-alkylene, wherein z=2, 3, or 4, for example, methylene, ethane-1,2-diyl, propane-1,3-diyl, propane-1,2-diyl, or phenylene.

The dioxazoline in the component c4) may be preferably 2,2'-bis(2-oxazoline), bis(2-oxazolinyl)methane, 1,2-bis(2-oxazolinyl)ethane, 1,3-bis(2-oxazolinyl)propane, or 1,4-bis(2-oxazolinyl)butane, particularly 1,4-bis(2-oxazolinyl)benzene, 1,2-bis(2-oxazolinyl)benzene, or 1,3-bis(2-oxazolinyl)benzene.

The dioxazine is preferably 2,2'-bis(2-dioxazine), bis(2-dioxazinyl)methane, 1,2-bis(2-dioxazinyl)ethane, 1,3-bis(2-dioxazinyl)propane, or 1,4-bis(2-dioxazinyl)butane, particularly 1,4-bis(2-dioxazinyl)benzene, 1,2-bis(2-dioxazinyl)benzene, or 1,3-bis(2-dioxazinyl)benzene.

The carbodiimide may be N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, and di-tert-butylcarbodiimide.

A use amount of the component c4), calculated based on the total weight of the aliphatic-aromatic polyester composition, may be 0.1-2 wt%, preferably 0.2-1 wt%.

In the aliphatic-aromatic polyester composition, the component i), particularly preferably, the aliphatic-aromatic polyester includes: the terephthalic acid or a derivative of an ester thereof, or a mixture thereof as the aromatic dicarboxylic acid (component a1); adipic acid or a derivative of an ester thereof, or a mixture thereof as the aliphatic dicarboxylic acid (component a2); the 1,4-butanediol as the dihydroxy compound component (component b1); the glycerol, the pentaerythritol, or the trimethylolpropane as the component b2); and the hexamethylene-1,6-diisocyanate as the component c1).

In specific embodiments, preferably, calculated based on the weight of the aliphatic-aromatic polyester composition, the content of the titanium element is 63-81 ppm.

Preferably, the acid number of the aliphatic-aromatic polyester composition is ≤0.78 mg KOH/g according to the standard DIN EN 12634-1998.

Preferably, the yellowness index (YI) value of the aliphatic-aromatic polyester composition is ≤19 according to the standard ASTM E313-73.

Preferably, when the aliphatic-aromatic polyester composition is boiled in water at 60°C for 48 h, the viscosity number retention rate η of the aliphatic-aromatic polyester composition is ≥72% after boiling in water.

Preferably, according to the standard ISO 1133-2-2011, a melt index of the aliphatic-aromatic polyester composition determined at 190°C and 2.16 kg is 1.0-22.0 g/10 min, further preferably 2.0-10.0 g/10 min.

Meanwhile, the aliphatic-aromatic polyester composition of the present invention also has biodegradability.

For the present invention, when a substance or a substance mixture shows, as defined in DIN EN 13432, a biodegradation percentage degree of at least 90%, the substance or the substance mixture has the characteristic of "biodegradability".

Biodegradation usually leads to decomposition of a polyester or a polyester mixture within a reasonable inspection period. Degradation may occur through an enzymatic, hydrolytic or oxidative pathway, and/or through exposure to electromagnetic radiation such as ultraviolet radiation, and is most commonly caused by exposure to microorganisms such as bacteria, yeast, fungi and algae. By mixing the polyester with compost and storing the same for a specific period of time, the biodegradability can be quantified. For example, according to DIN EN 13432, during a composting process, $CO_2$-free air is introduced into the matured compost, and the compost is subjected to a specific temperature process. Herein, the biodegradability is defined as a biodegradation percentage degree expressed as a ratio of a net amount of $CO_2$ released by a sample (after subtracting an amount of $CO_2$ released by compost without the sample) to a maximum amount of $CO_2$ released by the sample (calculated based on a carbon content in the sample).

Other methods for determining the biodegradability are described in ASTM D5338 and ASTM D6400.

The present invention also specifically protects a method for preparing the aliphatic-aromatic polyester composition, which includes the following steps:

mixing the component A and the component B with or without addition of a titanium catalyst to generate a paste, and then carrying out the following operations:

step i), allowing the paste to undergo an esterification or transesterification reaction with all or a part of the titanium catalyst until a viscosity number of an esterification or transesterification product determined in a phenol/o-dichlorobenzene solution with a weight ratio of 1:1 under a constant-temperature water bath at 25±0.05°C according to GB/T 17931-1999 is 12-21 ml/g;

step ii), allowing the esterification or transesterification product obtained in the step i) to undergo a pre-polycondensation reaction until a viscosity number of a prepolymer determined in a phenol/o-dichlorobenzene solution with a weight ratio of 1:1 under a constant-temperature water bath at 25±0.05°C according to GB/T 17931-1999 is 36-52 ml/g;

step iii), allowing the prepolymer obtained in the step ii) to undergo a polycondensation reaction until a viscosity number of a final polymerization product determined in a phenol/o-dichlorobenzene solution with a weight ratio of 1:1 under a constant-temperature water bath at 25±0.05°C according to GB/T 17931-1999 is 145-203 ml/g; and

step iv), slicing the final polymerization product in the step iii) to obtain a polyester particle, and then carrying out contact treatment with a tetrahydrofuran aqueous solution to obtain the aliphatic-aromatic polyester composition.

It should be noted that

in the method for preparing the aliphatic-aromatic polyester composition of the present invention, a specific operation for determining the viscosity number according to GB/T 17931-1999 is as follows:
determining the viscosity number of the product in a phenol/o-dichlorobenzene solution at a weight ratio of 1:1 under a constant-temperature water bath at 25±0.05°C according to GB/T 17931-1999.

Preferably, in the step i), the dicarboxylic acid component A and the dihydroxy compound component B are mixed in a preliminary step. Substances that are usually mixed include:
1.0 mol equivalent of a mixture composed of the aliphatic and aromatic dicarboxylic acids or esters thereof (component A), 1.2-2.4 mol equivalent, preferably 1.3-1.8 mol equivalent, of the $C_2$-$C_6$ aliphatic alkanediol (component b1), and calculated based on the total weight of the components A) and b1), preferably 0-3 wt%, more preferably 0.02-1 wt%, and particularly preferably 0.08-0.60 wt%, of the compound b2 containing at least three functional groups.

The catalyst may be a tin compound, an antimony compound, a cobalt compound, a lead compound, a zinc compound, an aluminum compound, or a titanium compound, more preferably the zinc compound, the aluminum compound, or the titanium compound, and most preferably the titanium compound.

Further, in the preparation method of the present invention, a use amount of the titanium catalyst is 0.001-1 wt%, preferably 0.03-0.2 wt%, of a mass of the final polymerization product in the step iii), and an addition amount of the catalyst in the step i) is preferably 50-80% of a total use amount of the catalyst. Controlling the addition amount of the catalyst can make a subsequent processing process stabler.

The titanium catalyst may be tetrabutyl titanate or tetraisopropyl titanate, which has a less toxic residue amount remaining in a product or a downstream product compared with other compounds. Such property is particularly important in biodegradable polyesters, because the biodegradable polyesters are introduced directly into the environment in the form of compost bags or mulching films.

Meanwhile, in the step i), a temperature of the esterification reaction may be 180-260°C, preferably 220-250°C; and a reaction pressure is 40-120 KPa, preferably 60-90 KPa.

The step i) can be carried out in a mixing device, for example, a vertical reactor with a stirrer. A retention time is 2-6 h, preferably 3-5 h.

In the step ii), a liquid obtained by the esterification reaction in the step i) is added into a reactor for the pre-condensation reaction together with the remaining catalyst. A reaction temperature is 235-260°C, preferably 240-250°C; and a pressure is 600-3,000 Pa, preferably 800-2,100 Pa. A typical retention time is 2-6 h, preferably 3-4 h.

The steps i), ii) and iii) can be carried out under the same titanium catalyst.

In the step iii), if necessary, another titanium-containing compound may be added into the reaction system. The available another titanium-containing compound is one or a mixture of titanium tetrachloride, ferrous titanate, and barium metatitanate. An addition amount of the titanium-containing compound may be 0-0.06 wt%, preferably 0.001-0.04 wt%, calculated based on an amount of the final polymerization product after the step iii).

In the step iii), the polycondensation process is carried out in a reactor such as a rotating disk reactor or a cage-shaped reactor; a temperature of the polycondensation reaction is preferably 235-260°C, preferably 240-250°C; a pressure is 50-600 Pa, preferably 100-300 Pa; and a typical retention time is preferably 2-6 h, preferably 3-5 h.

Preferably, after the step iii) and before the step iv), the final polymerization product is allowed to undergo a chain extension reaction in step iii-1) using a chain extender.

Specific operations of the chain extension reaction are as follows:

step iii-1), after the step iii) is completed, adding the final polymerization product obtained in the step iii) into a twin-screw extruder or a static mixer, and adding the chain extender that is 0.05-2 wt%, particularly preferably 0.1-1.5 wt%, of the mass of the final polymerization product to carry out the reaction at 195-225°C for 5-12 min to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 is 163-232 mL/g.

In specific embodiments, the chain extender is one or more of an isocyanate, a peroxide, an epoxide, and oxazoline, oxazine, caprolactam, and/or carbodiimide.

The chain extender may be, for example, one or more of toluene-2,4-diisocyanate, toluene-2,6-diisocyanate, hexamethylene diisocyanate, pentamethylene diisocyanate, and isophorone diisocyanate.

Further preferably, the chain extender is hexamethylene-1,6-diisocyanate, and a use amount thereof is 0.1-1.5 wt% of a weight of the chain growth product.

To further improve the yellowness index and hydrolysis resistance of the aliphatic-aromatic polyester compositions, the step iv) can be carried out. In the step iv), a weight content of tetrahydrofuran in the tetrahydrofuran aqueous solution is 10-65 wt%, preferably 25-45 wt%. When the content of tetrahydrofuran in the tetrahydrofuran aqueous solution is higher, the content of tetrahydrofuran remaining in the polyester particle is higher. When the content of tetrahydrofuran in the tetrahydrofuran aqueous solution is lower, an elution effect cannot be effectively achieved, and the yellowness index and hydrolysis resistance of the polyester composition are not improved obviously.

Further preferably, a temperature of the contact treatment in the step iv) is 20-65°C, more preferably 35-55°C.

Further preferably, a duration of the contact treatment in the step iv) is 2-20 h, more preferably 5-16 h, and further preferably 8-12 h.

Preferably, a mass ratio of the polyester particle to the tetrahydrofuran aqueous solution in the step iv) is 1:1 to 1:10.

Furthermore preferably, the mass ratio of the polyester particle to the tetrahydrofuran aqueous solution in the step iv) is 1:2 to 1:5.

The temperature and duration of the contact treatment of the polyester particle with the tetrahydrofuran aqueous solution as well as the mass ratio of the polyester particle to the tetrahydrofuran aqueous solution all affect the final elution effect and the yellowness index and hydrolysis resistance of the prepared aliphatic-aromatic polyester composition.

When the contact temperature is too high, the tetrahydrofuran is volatilized more quickly, resulting in greater loss. When the contact temperature is too low, the elution effect cannot be effectively achieved, and the yellowness index and hydrolysis resistance of the polyester composition are not improved obviously.

When the contact time is too long, the content of tetrahydrofuran remaining in the polyester composition is excessive. When the contact time is too short, the elution effect cannot be effectively achieved, and the yellowness index and hydrolysis resistance of the polyester composition are not improved obviously.

When the mass ratio of the polyester particle to the tetrahydrofuran aqueous solution is too high, although the elution effect can be effectively improved, higher consumption of a solvent is required, more waste liquid is generated, an economic benefit is low, and the content of tetrahydrofuran remaining in the polyester composition is excessive. When the mass ratio of the polyester particle to the tetrahydrofuran aqueous solution is too low, even dispersion of the polyester particle in the solution cannot be achieved, the elution effect is uneven and poor, and the yellowness index and hydrolysis resistance of the polyester composition are not improved obviously.

The aliphatic-aromatic polyester composition of the present invention also includes a small amount of tetrahydrofuran. The tetrahydrofuran is mainly derived from three parts. One part is derived from tetrahydrofuran produced by decomposition of the 1,4-butanediol during a synthesis process of the polyester, one part is derived from "occlusion" of a terminal end group of the polyester caused by thermal decomposition during the polymerization process, and the third part is derived from a residue of the tetrahydrofuran aqueous solution in the contact treatment process in the step iv). The tetrahydrofuran remaining in the polyester particle is not desired by the present invention. **In** principle, the lower content of tetrahydrofuran remaining in the polyester particle is better.

Decrease of the content of tetrahydrofuran can be achieved by methods, such as controlling the reaction temperature, the reaction pressure, etc., in the steps i), ii) and iii), or achieved by optimizing the contact treatment conditions in the step iv), such as optimizing the concentration of the tetrahydrofuran aqueous solution, the temperature and duration of the contact treatment, a solid-liquid ratio of the contact treatment, etc. When the reaction temperature in the steps i), ii) and iii) is too low, a too long polymerization time is usually caused, making it difficult to obtain the polyester with the low acid number. When the reaction pressure is too low, requirements for equipment are higher, thus requiring a larger capital investment. For the contact treatment conditions in the step iv), the elution effect and an improvement effect on the color and hydrolysis resistance of the polyester product also need to be taken into account simultaneously.

The aliphatic-aromatic polyester composition prepared by the preparation method of the present invention includes the following components:

i) the aliphatic-aromatic polyester based on the aliphatic and aromatic dicarboxylic acids and the aliphatic dihydroxy compound, wherein the aliphatic-aromatic polyester at least includes the following components:

A) the dicarboxylic acid component:

a1) calculated based on the total molar amount of the a1) and the a2), 46.2-49.5 mol% of the derivative of the aromatic dicarboxylic acid or an ester thereof, or a mixture thereof;
a2) calculated based on the total molar amount of the a1) and the a2), 50.5-53.8 mol% of the derivative of the aliphatic dicarboxylic acid or an ester thereof, or a mixture thereof;
wherein the total molar percentage of the components a1) and a2) is 100%;

and B) the dihydroxy compound component:

b1) the $C_2$-$C_6$ aliphatic alkanediol with at least the same molar amount as the component A, or a mixture thereof;
b2) calculated based on the total weight of the components A and b1, 0-3 wt% of the compound containing at least three functional groups;

ii) the titanium element, wherein calculated based on the weight of the aliphatic-aromatic polyester composition, the content of the titanium element is 55-88 ppm; and
iii) the tetrahydrofuran, wherein calculated based on the weight of the aliphatic-aromatic polyester composition, a content of the tetrahydrofuran is 40-170 ppm;

wherein the acid number of the aliphatic-aromatic polyester composition is ≤0.84 mg KOH/g according to the standard DIN EN 12634-1998.

Preferably, calculated based on the weight of the aliphatic-aromatic polyester composition, the content of the tetrahydrofuran is 86-136 ppm.

An odor grade of the aliphatic-aromatic polyester composition prepared by the preparation method of the present invention is less than or equal to 4.5 according to the FLTM BO131-03 standard.

The present invention also specifically protects use of the aliphatic-aromatic polyester composition in preparation of a polyester fiber.

The polyester composition of the present invention has a low yellowness index and better hydrolysis resistance. The polyester composition of the present invention as a base resin is also suitable for production of a biodegradable polymer mixture containing one or more of components selected from the following:
an aliphatic polyester, polycaprolactone, starch (thermoplasticized or non-plasticized), cellulose, polyhydroxyalkanoate, and polylactic acid.

The biodegradable polymer mixture can be used for preparing a polyester fiber.

The present invention also specifically protects a polyester fiber, which includes the following components:

i) calculated based on a total weight of components i)-iv), 5-15 wt% of the above aliphatic-aromatic polyester composition;
ii) calculated based on the total weight of the components i)-iv), 35-70 wt% of an aliphatic polyester;
iii) calculated based on the total weight of the components i)-iv), 10-40 wt% of one or more components selected from starch, wood flour, cellulose, polyhydroxyalkanoate, polyglycolic acid, and polylactic acid; and
iv) calculated based on the total weight of the components i)-iv), 10-35 wt% of one or more components selected from talcum powder, calcium carbonate, barium sulfate, montmorillonite, and kaolin.

The present invention also specifically protects use of the polyester fiber in masks and clothing.

Compared with the prior art, the present invention has the following beneficial effects.

The aliphatic-aromatic polyester composition of the present invention, calculated based on the mass of the aliphatic-aromatic polyester composition, includes the titanium element with the content of 55-88 ppm. According to the standard DIN EN 12634-1998, the acid number of the aliphatic-aromatic polyester composition is ≤0.84 mg KOH/g. Through comprehensive regulation of the content of the titanium element and the acid number, the aliphatic-aromatic polyester composition not only has the low yellowness index and good coloring performance, but also effectively improves the hydrolysis resistance, and can be widely used in the field of polyester fibers.

Further, the content of the tetrahydrofuran in the aliphatic-aromatic polyester composition of the present invention is 20-170 ppm, and the odor grade is less than or equal to 4.5 according to the FLTM BO131-03 standard.

## DETAILED DESCRIPTION OF EMBODIMENTS

The present invention is further illustrated below in combination with specific embodiments, but the present invention is not limited to examples in any form. Unless otherwise specified, raw materials and reagents used in the examples of the present invention are conventionally purchased raw materials and reagents.

Information of various raw materials in examples and comparative examples of the present invention is illustrated as follows:

1,4-butanediol was purchased from Xinjiang Markorchem Co., Ltd.;
terephthalic acid was purchased from Zhuhai Ineos Chemical Co., Ltd.;
adipic acid was purchased from Chongqing Huafeng Chemical Group Co., Ltd.;
sebacic acid was purchased from Hengshui Jinghua Chemical Co., Ltd.;
glycerol was purchased from Aladdin;
tetrabutyl titanate was purchased from Jianyi Chemical Import and Export Co., Ltd.;
titanium tetrachloride was purchased from Aladdin; and
hexamethylene diisocyanate was purchased from Aladdin.

Performance test methods involved in the present invention are specifically illustrated as follows.

Test of a molar content of an aromatic dicarboxylic acid (a1) and a molar content of adipic acid (a2) in an aliphatic-aromatic polyester:

20 mg of an aliphatic-aromatic polyester composition sample was weighed and dissolved in 0.6 mL of deuterated chloroform, and then, 1HNMR was determined using an AV 500 nuclear magnetic resonance spectrometer of Bruker at room temperature, wherein a peak of the chloroform as a solvent was calibrated at around 7.26 ppm.

As can be seen from the reference: Chen, X.; Chen, W.; Zhu, G.; Huang, F.; Zhang, J., Synthesis, 1H-NMR characterization, and biodegradation behavior of aliphatic-aromatic random copolyester. J. Appl. Polym. Sci. 2007, 104(4): 2643-2649, the aromatic dicarboxylic acid, such as terephthalic acid, has 4 hydrogen atoms on a benzene ring in a repeating unit appearing at around 8.10 ppm; and an aliphatic dicarboxylic acid, such as adipic acid, has 4 hydrogen atoms of two CH2 units adjacent to a carbonyl group in a repeating unit appearing at around 2.33 ppm. Accordingly, the molar contents of the diacid components can be expressed by integral areas ($I_T$ and $I_A$) of the two peaks at 8.10 ppm and 2.33 ppm:

molar content of aromatic dicarboxylic acid in aliphatic-aromatic polyester=$I_T/(I_T+I_A)\times100\%$; and
molar content of adipic acid in aliphatic-aromatic polyester=$I_A/(I_T+I_A)\times100\%$.

Test of a viscosity number: According to GB/T 17931-1999, a test was carried out in a phenol/o-dichlorobenzene solution at a weight ratio of 1:1 under a constant-temperature water bath at 25±0.05°C, wherein a sample concentration was 5 mg/ml.

Acid number: The acid number (AN) (mg KOH/g) of samples was determined according to DIN EN 12634 in October, 1998.

A solvent mixture used included 1 part by volume of dimethyl sulfoxide, 8 parts by volume of isopropanol and 7 parts by volume of toluene, wherein the volume of the solvent mixture was 150 mL.

According to the DIN EN 12634 standard, the samples were pre-titrated to determine an appropriate sample mass and ensure that a volume of a titration solution consumed was 2-3 mL. The samples were added into the solvent mixture and heated to 70-85°C to ensure that all of the samples were completely dissolved into clear solutions, and during the titration, the temperatures of the solutions were maintained at 65-75°C to avoid precipitation of the samples. If appropriate, tetrabutylammonium hydroxide was selected as the titration solution while avoiding the use of highly toxic tetramethylammonium hydroxide. Meanwhile, to prevent the solvent mixture from absorbing $CO_2$ from the air and affecting the volume of the titration solution consumed by a blank solvent, when the volume of the titration solution consumed by the blank solvent was tested, the blank solvent was pre-treated in the same test operation process as the samples, for example, the blank solvent was subjected to heating treatment with the same time and temperature, and then the blank solvent was titrated.

Test method of a yellowness index (YI): According to ASTM E313-73, the yellowness index of an aliphatic-aromatic polyester composition particle was determined using a Minolta CM-5 spectrophotometer, a particle size of the particle was 1.2-5.4 g/100 particles, and a parallel test was carried out for three times to determine a mean value. A granular material to be analyzed was filled using a glass cuvette (from Minolta) (with a filling height of at least 3 cm). The granular material was pressed by a pressure of a measuring head of a Minolta instrument.

Evaluation of hydrolysis resistance:
The hydrolysis resistance of an aliphatic-aromatic polyester composition was evaluated according to the following method:

1) dehumidifying and drying an aliphatic-aromatic polyester composition sample at 80°C for 4 h, and testing an initial viscosity number $\eta_0$ before boiling in water according to the standard GB/T 17931-1999;
2) placing the aliphatic-aromatic polyester composition sample in a water bath for boiling in water at 60°C for 48 h;
3) after 48 h, taking out the aliphatic-aromatic polyester composition sample, and transferring the sample into a dryer for storage at an ambient temperature for 24 h to achieve internal equilibrium conditions of the sample; and
4) after reaching equilibrium, dehumidifying and drying the sample at 80°C for 4 h, and testing a viscosity number $\eta_1$ after boiling in water for 48 h according to the standard GB/T 17931-1999.

A viscosity number retention rate of the aliphatic-aromatic polyester composition after boiling in water is

$$\eta = \eta_1 / \eta_0$$

wherein the $\eta_1$ represents the viscosity number of the aliphatic-aromatic polyester composition after boiling in water at 60°C for 48 h, and the $\eta_0$ represents the viscosity number of the aliphatic-aromatic polyester composition before boiling in water.

The greater viscosity number retention rate $\eta$ of the aliphatic-aromatic polyester composition after boiling in water indicates that the hydrolysis resistance of the sample is higher. The smaller viscosity number retention rate $\eta$ indicates that the hydrolysis resistance of the sample is lower.

Content of a titanium element: The content of the titanium element in an aliphatic-aromatic polyester composition was analyzed by ICP-OES and tested according to the following procedure with reference to US EPA Method 3052:1996.

About 0.1 g of the aliphatic-aromatic polyester composition was weighed and crushed, 5 ml of nitric acid was added to completely immerse the aliphatic-aromatic polyester composition, then 1.0 ml of hydrogen peroxide was dropped to carry out a reaction for 2 min, and the mixture was sealed in a microwave digestion tank for digestion at 210°C for 3 h, cooled to room temperature, filtered with a 0.45 μm filter membrane, diluted to 50 ml with distilled water and tested by ICP-OES.

Test method of a tetrahydrofuran (THF) content: About 1.2 g of a sample was weighed with a headspace temperature of 105°C and a headspace time of 2 h. A test was carried out using Agilent 7697A-7890A equipment.

Test parameters and test methods of Agilent 7697A-7890A are shown in Table 1 and Table 2.

Table 1 Test parameters of Agilent 7697A

| Parameter category | Parameter name | Parameter set value |
|---|---|---|
| Temperature | Heating box/°C | 105 |
| | Quantitative loop/°C | 135 |
| | Transmission line/°C | 165 |
| Time | Sample bottle equilibrium/min | 120 |
| | Sample injection duration/(min) | 0.09 |
| | GC cycle/min | 30 |
| Sample bottle and quantitative loop | Sample bottle volume/mL | 10 |
| | Sample bottle filling mode | Self-defined |
| | Filling flow/mL/min | 50 |
| | Filling pressure/psi | 23.2 |
| | Retention time/min | 0.31 |
| | Quantitative loop filling mode | Self-defined |

Table 2 Test parameters of Agilent 7890A

| Parameter category | Parameter name | Parameter value |
|---|---|---|
| Chromatographic column | GC | J&W 122-7032: 250°C: 30 m*250 μm*0.25 μm |
| | Sample injection | Rear SS sample injection DN |
| | Sample discharge | Front detector FID |
| Column box | Column box temperature | Open |
| | Equilibrium time/min | 0.5 |
| | Highest column box temperature/°C | 250 |
| FID detector | Heater/°C | 250 |
| | $H_2$ flow/mL/min | 30 |
| | Air flow/mL/min | 400 |
| | Tail gas flow ($N_2$)/ml/min | 25 |
| SSL-rear sample injection port | Heater/°C | 200 |
| | Pressure/psi | 11.258 |
| | Cushion purge flow ml/min | 3 |
| | Total flow/ml/min | 11 |
| | Split ratio | 7:1 |

GC heating procedure:
adopting an initial value of 50°C for a retention time of 3 min; and heating to 200°C at a heating rate of 12°C/min for a retention time of 4 min.

Comparative Examples 1-7

Comparative Example 1:

Step i): 452 kg of terephthalic acid, 437 kg of adipic acid, 690 kg of 1,4-butanediol, 2.30 kg of glycerol and 0.560 kg of tetrabutyl titanate were physically mixed at normal temperature in an esterification reactor, and then, the mixture was allowed to undergo an esterification reaction at 235°C and at a pressure of 90 KPa for 4-5 h to obtain an esterification product, wherein a viscosity number of the esterification product determined in a phenol/o-dichlorobenzene solution with a weight ratio of 1:1 under a constant-temperature water bath at $25\pm0.05$°C according to GB/T 17931-1999 was 23 ml/g.

Step ii): The esterification product was introduced into a vertical stirring and full-mixing reactor, 0.400 kg of tetrabutyl titanate was added into the reactor, a reaction was carried out under heating to 242°C at a pressure of 1,800 Pa for 2-3 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at $25\pm0.05$°C according to GB/T 17931-1999 was 65 ml/g.

Step iii): The reaction mixture was transferred into a final polymerization reactor to carry out polycondensation at a temperature of 248°C and a pressure of 115 Pa for 2-3 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at $25\pm0.05$°C according to GB/T 17931-1999 was 181 ml/g.

Step iv): A polyester particle was put into a reactor to carry out contact treatment with a tetrahydrofuran aqueous solution according to a mass ratio of 1:5, wherein a mass concentration of the tetrahydrofuran aqueous solution was 45%, a temperature of the contact treatment was 35°C, and a duration of the contact treatment was 8 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable composition obtained after the drying in the step iv) were tested, and the hydrolysis resistance and the odor were evaluated. Specific data are shown in Table 1.

Comparative Example 2:

Step i): 452 kg of terephthalic acid, 437 kg of adipic acid, 690 kg of 1,4-butanediol, 2.30 kg of glycerol and 0.235 kg of tetrabutyl titanate were physically mixed at normal temperature in an esterification reactor, and then, the mixture was allowed to undergo an esterification reaction at 240°C and at a pressure of 85 KPa for 5-6 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 8 ml/g.
Step ii): The esterification product was introduced into a vertical stirring and full-mixing reactor, 0.125 kg of tetrabutyl titanate was added into the reactor, a reaction was carried out under heating to 245°C at a pressure of 1,600 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 28 ml/g.
Step iii): The reaction mixture was transferred into a final polymerization reactor to carry out polycondensation at a temperature of 252°C and a pressure of 145 Pa for 4-5 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 169 ml/g.
Step iv): A polyester particle was put into a reactor to carry out contact treatment with a tetrahydrofuran aqueous solution according to a mass ratio of 1:5, wherein a mass concentration of the tetrahydrofuran aqueous solution was 45%, a temperature of the contact treatment was 35°C, and a duration of the contact treatment was 8 h.
After the contact treatment process, a drying process was also carried out, and the drying was carried out in a blast drying tower.
According to the test methods of the present invention, the viscosity number, acid number, melt index, content of titanium element, THF content and yellowness index of a biodegradable polyester composition obtained after the drying in the step iv) were tested, and the hydrolysis resistance and the odor were evaluated. Specific data are shown in Table 1.

Comparative Example 3:

Step i): 452 kg of terephthalic acid, 437 kg of adipic acid, 690 kg of 1,4-butanediol, 2.30 kg of glycerol and 0.350 kg of tetrabutyl titanate were physically mixed at normal temperature in an esterification reactor, and then, the mixture was allowed to undergo an esterification reaction at 238°C and at a pressure of 90 KPa for 4-5 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 17 ml/g.
Step ii): The esterification product was introduced into a vertical stirring and full-mixing reactor, 0.220 kg of tetrabutyl titanate was added into the reactor, a reaction was carried out under heating to 245°C at a pressure of 2,100 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 48 ml/g.
Step iii): The reaction mixture was transferred into a final polymerization reactor to carry out polycondensation at a temperature of 251°C and a pressure of 100 Pa for 3-4 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 180 ml/g.
According to the test methods of the present invention, the viscosity number, acid number, melt index, content of titanium element, THF content and yellowness index of a biodegradable polyester composition obtained after the drying in the step iii) were tested, and the hydrolysis resistance and the odor were evaluated. Specific data are shown in Table 1.

Comparative Example 4:

In Comparative Example 4, step i) to step iii) were the same as those in Comparative Example 3.
Step iv): A polyester particle was put into a reactor to carry out contact treatment with a tetrahydrofuran aqueous solution according to a mass ratio of 1:15, wherein a mass concentration of the tetrahydrofuran aqueous solution was 5%, a temperature of the contact treatment was 20°C, and a duration of the contact treatment was 24 h.
After the contact treatment process, a drying process was also carried out, and the drying was carried out in a blast drying tower.
According to the test methods of the present invention, the viscosity number, acid number, melt index, content of titanium element, THF content and yellowness index of a biodegradable polyester composition obtained after the drying in the step iv) were tested, and the hydrolysis resistance and the odor were evaluated. Specific data are shown in Table 1.

Comparative Example 5:

In Comparative Example 5, step i) to step iii) were the same as those in Comparative Example 3.

Step iv): A polyester particle was put into a reactor to carry out contact treatment with a tetrahydrofuran aqueous solution according to a mass ratio of 1:0.5, wherein a mass concentration of the tetrahydrofuran aqueous solution was 75%, a temperature of the contact treatment was 40°C, and a duration of the contact treatment was 3 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable polyester composition obtained after the drying in the step iv) were tested, and the hydrolysis resistance and the odor were evaluated. Specific data are shown in Table 1.

Comparative Example 6:

Step i): 420 kg of terephthalic acid, 437 kg of adipic acid, 690 kg of 1,4-butanediol, 2.30 kg of glycerol and 0.385 kg of tetrabutyl titanate were physically mixed at normal temperature in an esterification reactor, and then, the mixture was allowed to undergo an esterification reaction at 238°C and at a pressure of 90 KPa for 4-5 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 11 ml/g.

Step ii): The esterification product was introduced into a vertical stirring and full-mixing reactor, 0.200 kg of tetrabutyl titanate was added into the reactor, a reaction was carried out under heating to 245°C at a pressure of 2,100 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 33 ml/g.

Step iii): The reaction mixture was transferred into a final polymerization reactor to carry out polycondensation at a temperature of 251°C and a pressure of 100 Pa for 3-4 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 173 ml/g.

Step iv): A polyester particle was put into a reactor to carry out contact treatment with a tetrahydrofuran aqueous solution according to a mass ratio of 1:5, wherein a mass concentration of the tetrahydrofuran aqueous solution was 45%, a temperature of the contact treatment was 35°C, and a duration of the contact treatment was 8 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable composition obtained after the drying in the step iv) were tested, and the hydrolysis resistance was evaluated. Specific data are shown in Table 1.

Comparative Example 7:

Step i): 585 kg of terephthalic acid, 437 kg of adipic acid, 760 kg of 1,4-butanediol, 2.60 kg of glycerol and 0.520 kg of tetrabutyl titanate were physically mixed at normal temperature in an esterification reactor, and then, the mixture was allowed to undergo an esterification reaction at 238°C and at a pressure of 90 KPa for 4-5 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 24 ml/g.

Step ii): The esterification product was introduced into a vertical stirring and full-mixing reactor, 0.225 kg of tetrabutyl titanate was added into the reactor, a reaction was carried out under heating to 245°C at a pressure of 2,100 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 55 ml/g.

Step iii): The reaction mixture was transferred into a final polymerization reactor to carry out polycondensation at a temperature of 251°C and a pressure of 100 Pa for 3-4 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 188 ml/g.

Step iv): A polyester particle was put into a reactor to carry out contact treatment with a tetrahydrofuran aqueous solution according to a mass ratio of 1:5, wherein a mass concentration of the tetrahydrofuran aqueous solution was 45%, a temperature of the contact treatment was 35°C, and a duration of the contact treatment was 8 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable composition obtained after the drying in the step iv) were tested, and the hydrolysis resistance was evaluated. Specific data are shown in Table 1.

Table 1. Performance test results of Comparative Examples 1-7

|  | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Terephthalic acid [mol%] | 47.5 | 47.5 | 47.5 | 47.5 | 47.5 | 45.8 | 54.0 |
| Adipic acid [mol%] | 52.5 | 52.5 | 52.5 | 52.5 | 52.5 | 54.2 | 46.0 |
| Content of titanium element [ppm] | 112 | 42 | 67 | 65 | 66 | 71 | 76 |
| THF content [ppm] | 98 | 165 | 86 | 223 | 186 | 122 | 136 |
| Acid number [mg KOH/g] | 0.52 | 1.48 | 1.26 | 1.06 | 1.14 | 0.86 | 0.93 |
| Viscosity number [ml/g] | 177 | 163 | 180 | 175 | 176 | 169 | 184 |
| Melt index [g/10 min] | 4.3 | 8.2 | 4.1 | 4.5 | 4.4 | 7.2 | 3.9 |
| Yellowness index (YI) | 27.31 | 25.83 | 24.86 | 23.63 | 24.27 | 23.11 | 23.52 |
| Viscosity number retention rate η | 59.2 | 45.6 | 49.7 | 54.7 | 51.4 | 59.1 | 57.2 |
| Odor grade | 3.0 | 4.5 | 3.0 | 6.0 | 5.0 | 3.5 | 3.5 |

Example 1

Step i): 452 kg of terephthalic acid, 437 kg of adipic acid, 690 kg of 1,4-butanediol, 2.30 kg of glycerol and 0.400 kg of tetrabutyl titanate were physically mixed at normal temperature in an esterification reactor, and then, the mixture was allowed to undergo an esterification reaction at 240°C and at a pressure of 100 KPa for 4-5 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 18 ml/g.

Step ii): The esterification product was introduced into a vertical stirring and full-mixing reactor, 0.200 kg of tetrabutyl titanate was added into the reactor, a reaction was carried out under heating to 247°C at a pressure of 1,900 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 50 ml/g.

Step iii): 0.050 kg of titanium tetrachloride was added, the reaction mixture was transferred into a final polymerization reactor to carry out polycondensation at a temperature of 250°C and a pressure of 120 Pa for 3-4 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 181 ml/g.

Step iv): A polyester particle was put into a reactor to carry out contact treatment with a tetrahydrofuran aqueous solution according to a mass ratio of 1:2, wherein a mass concentration of the tetrahydrofuran aqueous solution was 25%, a temperature of the contact treatment was 55°C, and a duration of the contact treatment was 12 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable polyester composition obtained after the drying in the step iv) were tested, and the hydrolysis resistance and the odor were evaluated. Specific data are shown in Table 2.

Examples 2-7:

In Examples 2-7, step i to step iii) were the same as those in Comparative Example 3. In step iv), a contact treatment process was carried out on biodegradable polyester compositions according to process conditions shown in Table 2.

Table 2. Performance test results of Examples 1-7

| | Example 1 | Example 2 | Example 3 | Example 4 | Example 5 | Example 6 | Example 7 |
|---|---|---|---|---|---|---|---|
| Terephthalic acid [mol%] | 47.5 | 47.5 | 47.5 | 47.5 | 47.5 | 47.5 | 47.5 |
| Adipic acid [mol%] | 52.5 | 52.5 | 52.5 | 52.5 | 52.5 | 52.5 | 52.5 |
| Weight content of tetra-hydrofuran in a tetrahy-drofuran aqueous solution % | 25 | 45 | 55 | 35 | 40 | 65 | 10 |
| Solid-liquid ratio | 1:2 | 1:5 | 1:4 | 1:1 | 1:8 | 1:3 | 1:10 |
| Contact temperature [°C] | 55 | 35 | 45 | 45 | 65 | 30 | 20 |
| Contact time [h] | 12 | 8 | 10 | 16 | 5 | 2 | 20 |
| Content of titanium element [ppm] | 81 | 66 | 66 | 66 | 65 | 66 | 65 |
| THF content [ppm] | 109 | 104 | 127 | 139 | 147 | 159 | 170 |
| Acid number [mg KOH/g] | 0.66 | 0.62 | 0.69 | 0.73 | 0.78 | 0.81 | 0.83 |
| Viscosity number [ml/g] | 177 | 175 | 174 | 175 | 173 | 176 | 172 |
| Melt index [g/10 min] | 4.3 | 4.5 | 4.7 | 4.5 | 4.9 | 4.4 | 5.3 |
| Yellowness index (YI) | 17.24 | 13.17 | 14.39 | 15.61 | 16.58 | 18.15 | 19.00 |
| Viscosity number retention rate η | 73.8 | 74.5 | 73.1 | 72.7 | 72.0 | 70.4 | 68.2 |
| Odor grade | 3.0 | 3.0 | 3.5 | 3.5 | 4.0 | 4.5 | 4.5 |

Example 8:

Step i): 425 kg of terephthalic acid, 437 kg of adipic acid, 690 kg of 1,4-butanediol, 2.30 kg of glycerol and 0.310 kg of tetrabutyl titanate were physically mixed at normal temperature in an esterification reactor, and then, the mixture was allowed to undergo an esterification reaction at 233°C and at a pressure of 70 KPa for 3-4 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 12 ml/g.

Step ii): The esterification product was introduced into a vertical stirring and full-mixing reactor, 0.240 kg of tetrabutyl titanate was added into the reactor, a reaction was carried out under heating to 243°C at a pressure of 1,200 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 36 ml/g.

Step iii): The reaction mixture was transferred into a final polymerization reactor to carry out polycondensation at a temperature of 252°C and a pressure of 110 Pa for 3-4 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 177 ml/g.

Step iv): A polyester particle was put into a reactor to carry out contact treatment with a tetrahydrofuran aqueous solution according to a mass ratio of 1:3, wherein a mass concentration of the tetrahydrofuran aqueous solution was 65%, a temperature of the contact treatment was 30°C, and a duration of the contact treatment was 2 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable polyester composition obtained after the drying in the step iv) were tested, and the hydrolysis resistance and the odor were evaluated. Specific data are shown in Table 3.

Example 9:

Step i): 570 kg of dimethyl terephthalate, 437 kg of adipic acid, 730 kg of 1,4-butanediol, 2.60 kg of glycerol and 0.340 kg of tetrabutyl titanate were physically mixed at normal temperature in an esterification reactor, and then, the mixture was allowed to undergo an esterification reaction at 240°C and at a pressure of 65 KPa for 3-4 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 21 ml/g.

Step ii): The esterification product was introduced into a vertical stirring and full-mixing reactor, 0.250 kg of tetrabutyl titanate was added into the reactor, a reaction was carried out under heating to 245°C at a pressure of 900 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 52 ml/g.

Step iii): The reaction mixture was transferred into a final polymerization reactor to carry out polycondensation at a temperature of 250°C and a pressure of 118 Pa for 4-5 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 186 ml/g.

Step iv): A polyester particle was put into a reactor to carry out contact treatment with a tetrahydrofuran aqueous solution according to a mass ratio of 1:8, wherein a mass concentration of the tetrahydrofuran aqueous solution was 40%, a temperature of the contact treatment was 65°C, and a duration of the contact treatment was 5 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable polyester composition obtained after the drying in the step iv) were tested, and the hydrolysis resistance and the odor were evaluated. Specific data are shown in Table 3.

Example 10:

Step i): 445 kg of terephthalic acid, 437 kg of adipic acid, 690 kg of 1,4-butanediol, 2.30 kg of glycerol and 0.285 kg of tetrabutyl titanate were physically mixed at normal temperature in an esterification reactor, and then, the mixture was allowed to undergo an esterification reaction at 240°C and at a pressure of 75 KPa for 4-5 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 14 ml/g.

Step ii): The esterification product was introduced into a vertical stirring and full-mixing reactor, 0.185 kg of tetrabutyl titanate was added into the reactor, a reaction was carried out under heating to 250°C at a pressure of 1,400 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 39 ml/g.

Step iii): The reaction mixture was transferred into a final polymerization reactor to carry out polycondensation at a temperature of 250°C and a pressure of 130 Pa for 3-4 h, the remaining excessive 1,4-butanediol and other by-products were removed by distillation, and then, granulation and drying were carried out to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 179 ml/g.

Step iv): A polyester particle was put into a reactor to carry out contact treatment with a tetrahydrofuran aqueous solution according to a mass ratio of 1:5, wherein a mass concentration of the tetrahydrofuran aqueous solution was 45%, a temperature of the contact treatment was 35°C, and a duration of the contact treatment was 8 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable polyester composition obtained after the drying in the step iv) were tested, and the hydrolysis resistance was evaluated. Specific data are shown in Table 3.

Example 11:

Step i): 475 kg of terephthalic acid, 437 kg of adipic acid, 690 kg of 1,4-butanediol, 2.40 kg of glycerol and 0.460 kg of tetrabutyl titanate were physically mixed at normal temperature in an esterification reactor, and then, the mixture was allowed to undergo an esterification reaction at 230°C and at a pressure of 60 KPa for 3-4 h to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 13 ml/g.

Step ii): The esterification product was introduced into a vertical stirring and full-mixing reactor, 0.234 kg of tetrabutyl titanate was added into the reactor, a reaction was carried out under heating to 240°C at a pressure of 630 Pa for 2-3 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 37 ml/g.

Step iii): 0.042 kg of titanium tetrachloride was added, the reaction mixture was transferred into a final polymerization reactor to carry out polycondensation at a temperature of 248°C and a pressure of 110 Pa for 2-3 h, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 147 ml/g.

Step iii-1): The final polymerization product in the step iii) was allowed to pass through a static mixer, 1.1 kg of hexamethylene diisocyanate was added to carry out a blending reaction at 200°C for 6 min, and then, granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 192 ml/g.

Step iv): A polyester particle was put into a reactor to carry out contact treatment with a tetrahydrofuran aqueous solution according to a mass ratio of 1:2, wherein a mass concentration of the tetrahydrofuran aqueous solution was 25%, a temperature of the contact treatment was 55°C, and a duration of the contact treatment was 12 h.

After the contact treatment process, a drying process was also carried out, and the drying was carried out in a blast drying tower.

According to the test methods of the present invention, the viscosity number, acid number, melt index, content of titanium element, THF content and yellowness index of a biodegradable polyester composition obtained after the drying in the step iv) were tested, and the hydrolysis resistance was evaluated. Specific data are shown in Table 3.

Example 12:

Step i-1): 437 kg of adipic acid, 350 kg of 1,4-butanediol and 2.60 kg of glycerol were physically mixed at normal temperature in an esterification reactor A, and then, the mixture was allowed to undergo an esterification reaction at 192°C and at a pressure of 110 KPa for 2-3 h to obtain an esterification product P-1, wherein a viscosity number of the esterification product determined in a phenol/o-dichlorobenzene solution with a weight ratio of 1:1 under a constant-temperature water bath at 25±0.05°C according to GB/T 17931-1999 was 7 ml/g.

Step i-2): 452 kg of terephthalic acid, 480 kg of 1,4-butanediol and 0.440 kg of tetrabutyl titanate were physically mixed at normal temperature in an esterification reactor B, and then, the mixture was allowed to undergo an esterification reaction at 240°C and at a pressure of 85 KPa for 3-4 h to obtain an esterification product P-2, wherein a viscosity number of the esterification product determined in a phenol/o-dichlorobenzene solution with a weight ratio of 1:1 under a constant-temperature water bath at 25±0.05°C according to GB/T 17931-1999 was 16 ml/g.

Step ii): The esterification product P-1 in the step i-1) was preheated to 230°C and then introduced into a vertical stirring and full-mixing reactor together with the esterification product P-2 in the step i-2), 0.100 kg of tetrabutyl titanate was added into the reactor, a reaction was carried out under heating to 243°C at a pressure of 2,200 Pa for 3-4 h, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 43 ml/g.

Step iii): The reaction mixture was transferred into a final polymerization reactor to carry out polycondensation at a temperature of 248°C and a pressure of 110 Pa for 2-3 h, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 145 ml/g.

Step iii-1): The final polymerization product in the step iii) was allowed to pass through a static mixer, 1.1 kg of hexamethylene diisocyanate was added to carry out a blending reaction at 220°C for 7 min, then, granulation was carried out using an underwater granulator, and then drying was carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 195 ml/g.

According to the test methods of the present invention, the viscosity number, acid number, melt index, content of titanium element, THF content and yellowness index of a biodegradable polyester composition obtained in the step iii-1) were tested, and the hydrolysis resistance and the odor were evaluated. Specific data are shown in Table 3.

Table 3. Performance test results of Examples 8-12

|  | Example 8 | Example 9 | Example 10 | Example 11 | Example 12 |
|---|---|---|---|---|---|
| Terephthalic acid/mol% | 46.2 | 49.5 | 47.3 | 48.8 | 47.5 |
| Adipic acid/mol% | 53.8 | 50.5 | 52.7 | 51.2 | 52.5 |
| Content of titanium element [ppm] | 66 | 65 | 55 | 88 | 63 |
| THF content [ppm] | 142 | 116 | 89 | 40 | 243 |
| Acid number [mg KOH/g] | 0.81 | 0.77 | 0.84 | 0.58 | 0.84 |
| Viscosity number [ml/g] | 173 | 182 | 174 | 189 | 195 |
| Melt index [g/10 min] | 5.0 | 4.0 | 4.7 | 2.7 | 2.0 |
| Yellowness index (YI) | 23.00 | 22.38 | 20.41 | 22.76 | 19.32 |
| Viscosity number retention rate η | 65.0 | 67.0 | 66.8 | 72.3 | 67.9 |
| Odor grade | 4.5 | 3.5 | 3.0 | 2.0 | 6.0 |

The data in Table 1, Table 2 and Table 3 indicate that when the content of the titanium element of the aliphatic-aromatic polyester composition is 55-88 ppm and is preferably 63-81 ppm and the acid number is not greater than 0.84 mg KOH/g and is preferably not greater than 0.78 mg KOH/g, the viscosity number retention rate η of the aliphatic-aromatic polyester composition is higher after boiling in water at 60°C for 48 h, and the yellowness index (YI) value of the biodegradable polyester composition is not greater than 23 and is preferably not greater than 19.

Obviously, the above examples of the present invention are only instances for clearly illustrating the present invention and are not limitations of the embodiments of the present invention. For those of ordinary skill in the art, other changes or alternations in different forms can also be made on the basis of the above description. It is not necessary and possible to list all of the embodiments herein. Any modifications, equivalent substitutions, improvements and the like made within the spirit and principles of the present invention shall be included in the scope of protection of the claims of the present invention.

**Claims**

1. An aliphatic-aromatic polyester composition, **characterized in that**, the composition comprises the following components:

    i) an aliphatic-aromatic polyester based on aliphatic and aromatic dicarboxylic acids and an aliphatic dihydroxy compound, wherein the aliphatic-aromatic polyester at least comprises the following components:

    A) a dicarboxylic acid component, comprising:

        a1) calculated based on a total molar amount of a1) and a2), 46.2 mol% - 49.5 mol% of an aromatic dicarboxylic acid or a derivative of an ester thereof, or a mixture thereof;
        a2) calculated based on the total molar amount of the a1) and the a2), 50.5 mol% - 53.8 mol% of an adipic acid or a derivative of an ester thereof, or a mixture thereof;
        wherein a total molar percentage of the components a1) and a2) is 100%;
        and B) a dihydroxy compound component, comprising:

b1) a $C_2$-$C_6$ aliphatic alkanediol with at least the same molar amount as the component A, or a mixture thereof;

b2) calculated based on a total weight of the components A and b1, 0 wt% - 3 wt% of a compound containing at least three functional groups; and

ii) a titanium element, wherein calculated based on a weight of the aliphatic-aromatic polyester composition, a content of the titanium element is 55 ppm - 88 ppm;

wherein an acid number of the aliphatic-aromatic polyester composition is ≤0.84 mg KOH/g according to the standard DIN EN 12634-1998.

2. The aliphatic-aromatic polyester composition according to claim 1, wherein a yellowness index YI value of the aliphatic-aromatic polyester composition determined according to the standard ASTM E313-73 is ≤23.

3. The aliphatic-aromatic polyester composition according to claim 1, wherein when the aliphatic-aromatic polyester composition is boiled in water at 60°C for 48 h, a viscosity number retention rate η of the aliphatic-aromatic polyester composition is ≥65% after boiling in water,

$$\eta=\eta_1/\eta_0$$

wherein

$\eta_1$ represents a viscosity number of the aliphatic-aromatic polyester composition after boiling in water at 60°C for 48 h, and

$\eta_0$ represents a viscosity number of the aliphatic-aromatic polyester composition before boiling in water.

4. The aliphatic-aromatic polyester composition according to claim 1, wherein the dicarboxylic acid component A) comprises the following components:

a1) calculated based on the total molar amount of the a1) and the a2), 47.3 mol% - 48.8 mol% of the aromatic dicarboxylic acid or a derivative of an ester thereof, or a mixture thereof; and

a2) calculated based on the total molar amount of the a1) and the a2), 51.2 mol% - 52.7 mol% of adipic acid or a derivative of an ester thereof, or a mixture thereof;

wherein the total molar percentage of the components a1) and a2) is 100%.

5. The aliphatic-aromatic polyester composition according to claim 1, wherein calculated based on the weight of the aliphatic-aromatic polyester composition, the content of the titanium element is 63 ppm - 81 ppm.

6. The aliphatic-aromatic polyester composition according to claim 1, wherein the acid number of the aliphatic-aromatic polyester composition is ≤0.78 mg KOH/g according to the standard DIN EN 12634-1998.

7. The aliphatic-aromatic polyester composition according to claim 2, wherein the yellowness index YI value of the aliphatic-aromatic polyester composition determined according to the standard ASTM E313-73 is ≤19.

8. The aliphatic-aromatic polyester composition according to claim 3, wherein when the aliphatic-aromatic polyester composition is boiled in water at 60°C for 48 h, the viscosity number retention rate η of the aliphatic-aromatic polyester composition is ≥72% after boiling in water.

9. The aliphatic-aromatic polyester composition according to claim 1, wherein the aliphatic-aromatic polyester composition further comprises component iii), tetrahydrofuran, and calculated based on the weight of the aliphatic-aromatic polyester composition, a content of the tetrahydrofuran is 40 ppm - 170 ppm.

10. The aliphatic-aromatic polyester composition according to claim 9, wherein calculated based on the weight of the aliphatic-aromatic polyester composition, the content of the tetrahydrofuran in the aliphatic-aromatic polyester composition is 86 ppm - 136 ppm.

11. The aliphatic-aromatic polyester composition according to claim 9 or 10, wherein an odor grade of the aliphatic-aromatic polyester composition is less than or equal to 4.5 according to the FLTM BO131-03 standard.

12. A method for preparing the aliphatic-aromatic polyester composition according to any one of claims 1-11, comprising the following steps:

mixing the component A and the component B with or without addition of a titanium catalyst to generate a paste, and then carrying out the following operations:

step i), allowing the paste to undergo an esterification or transesterification reaction with all or a part of the titanium catalyst until a viscosity number of an esterification or transesterification product determined in a phenol/o-dichlorobenzene solution with a weight ratio of 1:1 under a constant-temperature water bath at 25±0.05°C according to GB/T 17931-1999 is 12-21 ml/g;

step ii), allowing the esterification or transesterification product obtained in the step i) to undergo a pre-polycondensation reaction until a viscosity number of a prepolymer determined in a phenol/o-dichlorobenzene solution with a weight ratio of 1:1 under a constant-temperature water bath at 25±0.05°C according to GB/T 17931-1999 is 36-52 ml/g;

step iii), allowing the prepolymer obtained in the step ii) to undergo a polycondensation reaction until a viscosity number of a final polymerization product determined in a phenol/o-dichlorobenzene solution with a weight ratio of 1:1 under a constant-temperature water bath at 25±0.05°C according to GB/T 17931-1999 is 145-203 ml/g; and

step iv), allowing a polyester particle obtained in the step iii) to undergo contact treatment with a tetrahydrofuran aqueous solution to obtain the aliphatic-aromatic polyester composition.

13. The preparation method according to claim 12, wherein after the step iii) and before the step iv), a step iii-1) is also carried out: allowing the final polymerization product to undergo a chain extension reaction together with a chain extender until a viscosity number of a chain growth product determined according to GB/T 17931-1999 is 163-232 mL/g.

14. The preparation method according to claim 13, wherein the chain extender is one or more of an isocyanate, a peroxide, an epoxide, and oxazoline, oxazine, caprolactam, and/or carbodiimide.

15. The preparation method according to claim 14, wherein the chain extender is hexamethylene-1,6-diisocyanate, and a use amount thereof is 0.1-1.5 wt% of a weight of the chain growth product.

16. The preparation method according to claim 12, wherein a weight content of tetrahydrofuran in the tetrahydrofuran aqueous solution in the step iv) is 10 wt% - 65 wt%.

17. The preparation method according to claim 12, wherein a temperature of the contact treatment in the step iv) is 20-65°C.

18. The preparation method according to claim 12, wherein a duration of the contact treatment in the step iv) is 2-20 h.

19. The preparation method according to claim 12, wherein a mass ratio of the polyester particle to the tetrahydrofuran aqueous solution in the step iv) is 1:1 to 1:10.

20. Use of the aliphatic-aromatic polyester composition according to any one of claims 1-11 in preparation of a polyester fiber.

21. A polyester fiber, comprising the following components:

calculated based on a total weight of components i)-iv), 5 wt% - 15 wt% of the aliphatic-aromatic polyester composition according to any one of claims 1-11;

calculated based on the total weight of the components i)-iv), 35 wt% - 70 wt% of an aliphatic polyester;

calculated based on the total weight of the components i)-iv), 10 wt% - 40 wt% of one or more components selected from starch, wood flour, cellulose, polyhydroxyalkanoate, polyglycolic acid, and polylactic acid; and

calculated based on the total weight of the components i)-iv), 10 wt% - 35 wt% of one or more components selected from talcum powder, calcium carbonate, barium sulfate, montmorillonite, and kaolin.

22. Use of the polyester fiber according to claim 21 in masks and clothing.

## INTERNATIONAL SEARCH REPORT

| | International application No. |
|---|---|
| | **PCT/CN2023/134897** |

**A. CLASSIFICATION OF SUBJECT MATTER**

C08G63/20(2006.01)i; C08G63/85(2006.01)i; D01F6/84(2006.01)i; D01F8/02(2006.01)i

According to International Patent Classification (IPC) or to both national classification and IPC

**B. FIELDS SEARCHED**

Minimum documentation searched (classification system followed by classification symbols)

IPC: C08G63, D01F6, D01F8

Documentation searched other than minimum documentation to the extent that such documents are included in the fields searched

Electronic data base consulted during the international search (name of data base and, where practicable, search terms used)

DWPI, EPODOC, CNABS, CNKI, 万方, WANFANG, CNTXT: 对苯二甲酸, 间苯二甲酸, 丁二醇, 乙二醇, 甘油, 丙三醇, 己二酸, 聚酯, 钛, Ti, 黄度, 黄色, 发黄, 酸值, 羧酸, 羧基, 纤维, 组合物, terephthalic acid, isophthalic acid, butanediol, +ethylene glycol, glycerol, adipic acid, polyester?, titanium, Ti, yellowness, yellow, acid number, carboxylic acid, carboxyl, fiber, fibre, composition?

**C. DOCUMENTS CONSIDERED TO BE RELEVANT**

| Category* | Citation of document, with indication, where appropriate, of the relevant passages | Relevant to claim No. |
|---|---|---|
| PX | CN 115926128 A (KINGFA SCIENCE & TECHNOLOGY CO., LTD. et al.) 07 April 2023 (2023-04-07)<br>  claims 1-22 | 1-22 |
| PX | CN 115873222 A (KINGFA SCIENCE & TECHNOLOGY CO., LTD. et al.) 31 March 2023 (2023-03-31)<br>  embodiment 1 | 1-11 |
| Y | CN 113717356 A (ZHUHAI WANTONG CHEMICAL CO., LTD. et al.) 30 November 2021 (2021-11-30)<br>  embodiment 1, and claims 1-11 | 1-22 |
| Y | CN 1926169 A (MITSUBISHI CHEMICAL CORP.) 07 March 2007 (2007-03-07)<br>  page 7, paragraph 2 | 1-22 |
| Y | CN 113683763 A (JIANGSU KINGFA SCIENCE AND TECHNOLOGY ADVANCED MATERIALS CO., LTD. et al.) 23 November 2021 (2021-11-23)<br>  embodiment 5, and claims 1-14 | 1-22 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 March 2024** | **07 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/134897** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 1753929 A (MITSUBISHI CHEMICAL CORP.) 29 March 2006 (2006-03-29) page 5, paragraphs 7-8 | 1-22 |
| Y | CN 104163913 A (CHINA PETROCHEMICAL CO., LTD.) 26 November 2014 (2014-11-26) embodiment 1, and comparative example 1 | 1-22 |
| A | US 2006051576 A1 (SOEDA, T. et al.) 09 March 2006 (2006-03-09) entire document | 1-22 |
| A | US 2006270806 A1 (HALE, W. R.) 30 November 2006 (2006-11-30) entire document | 1-22 |

Form PCT/ISA/210 (second sheet) (July 2022)

**EP 4 631 989 A1**

| INTERNATIONAL SEARCH REPORT | | | | International application No. |
|---|---|---|---|---|
| Information on patent family members | | | | PCT/CN2023/134897 |

| Patent document cited in search report | | | Publication date (day/month/year) | Patent family member(s) | | | Publication date (day/month/year) |
|---|---|---|---|---|---|---|---|
| CN | 115926128 | A | 07 April 2023 | None | | | |
| CN | 115873222 | A | 31 March 2023 | None | | | |
| CN | 113717356 | A | 30 November 2021 | WO | 2023039923 | A1 | 23 March 2023 |
| | | | | CN | 113717356 | B | 07 April 2023 |
| CN | 1926169 | A | 07 March 2007 | WO | 2005095488 | A1 | 13 October 2005 |
| | | | | JP | 2005314690 | A | 10 November 2005 |
| | | | | CN | 100457801 | C | 04 February 2009 |
| | | | | JP | 5127118 | B2 | 23 January 2013 |
| CN | 113683763 | A | 23 November 2021 | CN | 113683763 | B | 13 September 2022 |
| | | | | EP | 4174105 | A1 | 03 May 2023 |
| | | | | WO | 2023071646 | A1 | 04 May 2023 |
| CN | 1753929 | A | 29 March 2006 | WO | 2004076524 | A1 | 10 September 2004 |
| | | | | TW | 200426173 | A | 01 December 2004 |
| | | | | TWI | 290562 | B | 01 December 2007 |
| | | | | JP | 2004277719 | A | 07 October 2004 |
| | | | | JP | 4993537 | B2 | 08 August 2012 |
| | | | | CN | 100378136 | C | 02 April 2008 |
| CN | 104163913 | A | 26 November 2014 | None | | | |
| US | 2006051576 | A1 | 09 March 2006 | MXPA | 05007248 | A | 08 September 2005 |
| | | | | WO | 2004063435 | A1 | 29 July 2004 |
| | | | | TW | 200416313 | A | 01 September 2004 |
| | | | | TWI | 317391 | B | 21 November 2009 |
| | | | | US | 7196158 | B2 | 27 March 2007 |
| | | | | ATE | 501287 | T1 | 15 March 2011 |
| | | | | KR | 20050090449 | A | 13 September 2005 |
| | | | | KR | 101077811 | B1 | 28 October 2011 |
| | | | | EP | 1584712 | A1 | 12 October 2005 |
| | | | | EP | 1584712 | A4 | 12 July 2006 |
| | | | | EP | 1584712 | B1 | 09 March 2011 |
| | | | | AU | 2003296095 | A1 | 10 August 2004 |
| | | | | DE | 60336345 | D1 | 21 April 2011 |
| | | | | CA | 2513056 | A1 | 29 July 2004 |
| US | 2006270806 | A1 | 30 November 2006 | TW | 200706596 | A | 16 February 2007 |
| | | | | WO | 2006127831 | A1 | 30 November 2006 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN, X.** ; **CHEN, W** ; **ZHU, G** ; **HUANG, F** ; **ZHANG, J.** Synthesis, 1H-NMR characterization, and biodegradation behavior of aliphatic-aromatic random copolyester.. *J. Appl. Polym. Sci.*, 2007, vol. 104 (4), 2643-2649